# EUROPÄISCHE PATENTSCHRIFT

(11) **EP 1 863 866 B1**
(45) Veröffentlichungstag und Bekanntmachung des Hinweises auf die Patenterteilung: **04.03.2009**
(21) Anmeldenummer: 06725178.5
(22) Anmeldetag: 20.03.2006
(51) Int. Cl.: C08J 3/12

(54) **VERFAHREN ZUR HERSTELLUNG VON POLYMERISATPULVERN**
METHOD FOR PRODUCING POLYMER POWDERS
PROCEDE DE PRODUCTION DE POUDRES POLYMERES

(30) Priorität: 21.03.2005 DE 102005013439
(43) Veröffentlichungstag der Anmeldung: 12.12.2007
(73) Patentinhaber: BASF SE, 67056 Ludwigshafen (DE)
(72) Erfinder: WEISS, Axel, 67346 Speyer (DE); BOTHE, Marc, 67117 Limburgerhof (DE); NOLTE, Rainer, 67117 Limburgerhof (DE); KLAUSMANN, Matthias, 67063 Ludwigshafen (DE); AMRHEIN, Patrick, 65239 Hochheim (DE); LANDHERR, Kenneth, 67071 Ludwigshafen (DE); WILDBURG, Gerald, 67346 Speyer (DE)
(86) Internationale Anmeldenummer: PCT/EP2006/060889
(87) Internationale Veröffentlichungsnummer: WO 2006/100228

(56) Entgegenhaltungen:
- DE-A1- 19 834 896
- DE-A1-0102004 003 43
- US-A1- 2002 072 552

## Beschreibung

Die vorliegende Erfindung betrifft die Herstellung eines Polymerisatpulvers mit verbesserten Pulvereigenschaften sowie dessen Verwendung als Schlagzähmodifier für Hart-Polyvinylchlorid (PVC)-Anwendungen. Der Schlagzähmodifier besteht aus Emulsionspolymerisatteilchen, die eine Kern-Schale-Struktur aufweisen, wobei die Schale aus einem harten Polymerisat und der Kern aus einem weichen, vernetzten Kautschukpolymer besteht.

Derartige Schlagzähmodifier werden gewöhnlich durch eine mehrstufige radikalische Emulsionspolymerisation hergestellt.

Die resultierende Modifierdispersion wird durch Sprühtrocknung oder durch Fällung und anschliessendes Trocknen des Koagulates in Pulverform überführt, mit pulverförmigem PVC und gegebenenfalls üblichen Zusatzstoffen gemischt.

Das Prinzip der Schlagzähmodifizierung beruht darauf, dass in die kontinuierliche PVC-Phase eine feindisperse Phase eines weichen, elastischen Polymeren eingelagert wird. Diese "Kautschuk-Phase" ermöglicht bei Schlagbeanspruchung eine verbesserte Energiedissipation.

Mit zunehmendem Masseanteil des Kerns der Schlagzähmodifierteilchen wird eine höhere Effizienz der Schlagzähwirkung erreicht. In EP 1 201 701 und EP 1 111 001 wird offenbart, dass der Anteil der weichen Phase eines Schlagzähmodifiers für eine möglichst hohe Schlagzähwirkung so hoch wie möglich gewählt werden muss.

Es ist bekannt, dass die resultierenden Pulvereigenschaften mit steigendem weichphasigem Kern-Anteil der zu trocknenden Polymerisatteilchen ungünstiger werden. Da bei einem geringen Anteil des harten Schalen-Polymers diese Schale nicht mehr vollständig geschlossen vorliegt, bewirkt ein dementsprechend hoher Anteil des weichen KernPolymers eine starke Klebrigkeit des getrockneten Polymerisats. Durch die Klebrigkeit werden die Pulvereigenschaften stark verschlechtert, die Rieselfähigkeit des Pulvers wird herabgesetzt.

US 4,278,576 lehrt, dass die Zugabe eines hydrophob gecoateten, gefällten Calciumcarbonat-Pulvers als Rieselhilfsmittel vor oder während der Trocknung einer Schlagzähmodifier-Polymerisatdispersion mit hohem Massenanteil des Kerns die resultierenden Pulvereigenschaften verbessert.

Aufgabe der vorliegenden Erfindung war die Verbesserung der Pulvereigenschaften eines Schlagzähmodifiers mit hohem Masseanteil des Kerns und hoher Schlagzäheffizienz.

Die Aufgabe wurde erfindungsgemäß gelöst durch ein
Verfahren zur Herstellung von Polymerisatpulver aus einer wäßrigen Polymerisatdispersion, dadurch gekennzeichnet, daß die wäßrige Dispersion der Polymerisatteilchen II durch radikalisch induzierte wäßrige Emulsionspolymerisation wenigstens eines ethylenisch ungesättigten Monomers C in Anwesenheit von dispers verteilten Polymerisatteilchen I erhalten wird, wobei
a. das Polymerisat des wenigstens einen ungesättigten Monomers C eine Glasübergangstemperatur > 60°C aufweist,
b. die dispers verteilten Polymerisatteilchen I durch radikalisch induzierte wässrige Emulsionspolymerisation einer Monomerenmischung I erhalten werden, welche zu

| | |
|---|---|
| 98,0 bis 99,9 Gew.-% | aus wenigstens einem ethylenisch ungesättigtem Monomer A besteht, dessen Polymerisat eine Glasübergangstemperatur < -20°C aufweiset, und |
| 0,1 bis 2,0 Gew.% | aus wenigstens einer vernetzend wirkenden, wenigstens zwei nicht konjugierte Vinylgruppen aufweisenden Verbindung (Monomere B) |

besteht,
c. das Mengenverhältnis von Monomerenmischung I zu Monomer C > 90 Gew.-%: <10 Gew.-% beträgt, wobei sich die Gesamtmengen an Monomerenmischung I und Monomer C zu 100 Gew.-% addieren,
d. die Herstellung des Pulvers aus der wässrigen Dispersion von Polymerisatteilchen II
i. durch Sprühtrocknung in Anwesenheit von 0,1 bis 15 Gew.-% wenigstens eines Antiblockmittels, bezogen auf die Gesamtmasse an Polymerisatteilchen II, und anschließender Zerkleinerung des Rohpulvers mittels mechanisch und/oder pneumatisch induzierter Scherkräfte oder
ii. durch mechanische und/oder pneumatische Mahltrocknung in Anwesenheit von 0,1 bis 15 Gew.% wenigstens eines Antiblockmittels, bezogen auf die Gesamtmenge an Polymerisatteilchen II, erfolgt.

Es wurde gefunden, daß die Pulvereigenschaften eines Schlagzähmodifier-Polymerisatpulvers, das durch Sprühtrocknung in Gegenwart von 0,1-15 Massen-% eines Antiblockmittels hergestellt wird, durch eine anschließende Scherung durch mechanisch und/oder pneumatisch induzierte Scherkräfte deutlich verbessert werden.

Das derart behandelte Pulver zeigt gegenüber dem Rohpulver eine verbesserte Rieselfähigkeit, eine höhere Schüttdichte und eine geringere Neigung zur Verbackung bei Lagerung unter Last.

Ein weiterer Gegenstand der Erfindung sind PVC-Massen, enthaltend die nach dem erfindungsgemäßen Verfahren hergestellten Polymerisatpulver sowie Formgegenstände, hergestellt unter Verwendung der so hergestellten PVC-Massen.

Der mittlere Teilchendurchmesser der Polymerisatteilchen II liegt im Bereich zwischen 100 und 500 nm, vorzugsweise zwischen 220 und 320 nm.

Die Pfropfcopolymerisate der erfindungsgemäßen chemischen Zusammensetzung sind an sich bekannt.

Der Kern der Teilchen besteht aus einem vernetzten Emulsionspolymerisat (Polymerisat I) mit einer Glasübergangstemperatur < -20°C. Die Schale besteht aus einem Polymerisat, des wenigstens einen Monomers C, das eine Verträglichkeit mit PVC aufweist und eine Glasübergangstemperatur > 60°C besitzt.

Der Anteil der Pfropfschale beträgt 10-0,1 Gew.%, vorzugsweise 7-3 Gew.-%. Sie enthält 90 bis 100 Gew.% des ethylenisch ungesättigten Monomers C. Unter dem Monomer C versteht man beispielsweise C₁-C₄-Alkylmethacrylate, C₁-C₈-Alkylacrylate, Vinylchlorid, Styrol oder Acrylnitril oder deren Mischungen. Besonders bevorzugt wird als Monomer C Methylmethacrylat eingesetzt. Daneben können den Monomeren C auch noch weitere copolymerisierbare ethylenisch ungesättigte Monomere zugegeben werden, wobei sich die Gesamtmengen an Monomer C und dem ethylenisch ungesättigten Monomer zu 100 Gew.-% addieren. Zweckmäßigerweise ist das Polymerisat der Schale mit PVC verträglich.

Die Pfropfcopolymerisate enthalten 90-99,9 Gew.%, vorzugsweise 93-97 Gew.-% eines weichen_ Pfropfkerns aus einem vernetzten Kautschuk aus den Monomeren A und B (Polymerisat I).

Die Monomere A sind beispielsweise ausgewählt aus der Gruppe der C₁-C₈-Alkylacrylate, vorzugsweise Butylacrylat, 2-Ethylhexylacrylat oder Gemischen davon. Daneben können den Monomeren A auch noch weitere copolymerisierbare ethylenisch ungesättigte Monomere zugegeben werden. Der Anteil an Monomer A beträgt 95 bis 100 Gew.%, wobei sich die Gesamtmengen an Monomer A und dem ethylenisch ungesättigten Monomer zu 100 Gew.-% addieren.

Die Monomere B wirken als Vernetzer und werden in Mengen von 0,1 bis 2,0 Gew.-% eingesetzt. Unter den Monomeren B versteht man vernetzend wirkende, wenigstens zwei nicht konjugierte Vinylgruppen aufweisende Verbindungen beispielsweise Allylmethacrylat, Butandiolmethacrylat oder Dihydrodicyclopentadienylacrylat.

Das Gewichtsverhältnis des Polymerisates 1 zu Monomer C ist grösser 90 Gew.-% zu kleiner 10 Gew.-%, vorzugsweise grösser als 93 Gew.-% zu kleiner 7 Gew.-%, insbesonders bevorzugt grösser gleich 97 Gew.% zu kleiner gleich 3 Gew.%, wobei sich die Gesamtmengen zu 100 Gew.-% addieren. Es wurde gefunden, dass im erfindungsgemässen Bereich ein Optimum der Schlagzäheffizienz durchlaufen wird.

Die Pfropfpolymerisate werden üblicherweise durch Emulsionspolymerisation in zwei Stufen hergestellt, wobei zunächst die Monomeren A + B zu dem vernetzten Polyacrylatkautschuk und dann in dessen Gegenwart die Monomeren C polymerisiert werden. Als Initiatoren können wasserlösliche thermisch zerfallende Initiatoren oder Redoxsysteme eingesetzt werden. Geeignete thermisch zerfallende Initiatoren sind beispielsweise Natrium-, Kalium- oder Ammoniumperoxodisulfat. Als Redoxsyteme kommen beispielsweise Hydroperoxide in Kombination mit Reduktionsmitteln in Frage. Es können für die Emulsionspolymerisation übliche Emulgatoren wie: Alkyl-, Aryl-, Alkanyl-, C₁₀-C₁₃-Alkylderivate der Benzolsulfonsäure, -sulfate, polyethersulfate, ethoxylierte Fettsäuren, -ester, -alkohole, -amine, -amide, -alkylphenole, Organophosphorsäuren verwendet werden. Die Emulsionspolymerisation erfolgt bei 10 bis 100°C. Sie kann sowohl als batch-Prozess als auch in Form eines Zulaufverfahrens, einschließlich Stufen- oder Gradientenfahrweise, durchgeführt werden. Bevorzugt ist die Zulauffahrweise, bei dem man einen Teil des Polymerisationsansatzes vorlegt, auf Polymerisationstemperatur erhitzt, anpolymerisiert und anschließend den Rest des Polymerisationsansatzes, üblicherweise über mehrere getrennte Zuläufe, von denen einer oder mehrere die Monomeren in reiner oder emulgierter Form enthalten, kontinuierlich, stufenweise oder unter Überlagerungen eines Konzentrationsgefälles unter Aufrechterhaltung der Polymerisation zuführt.

Das Pfropfcopolymerisat kann erfindungsgemäß eine bi- oder multimodale Teilchengrößenverteilung aufweisen. Es kann mindestens zwei Pfropfkautschuktypen, die die gleiche chemische Zusammensetzung haben, deren mittlerer Teilchendurchmesser sich jedoch um mindestens 30 nm, vorzugsweise um mindestens 50 nm unterscheiden enthalten. Der Pfopfkautschuktyp mit dem größten mittleren Teilchendurchmesser hat dabei einen Anteil von mindestens 15 %, vorzugsweise mindestens 20 % und insbesondere mindestens 25 % am gesamten Pfropfcopolymerisat. Sein mittlerer Teilchendurchmesser liegt vorzugsweise im Bereich zwischen 200 und 500 nm, insbesondere zwischen 250 und 350 nm. Der Pfropfkautschuktyp mit dem kleinsten mittleren Teilchendurchmesser hat einen Anteil von mindestens 5 %, vorzugsweise mindestens 8 % und insbesondere mindestens 12 % am gesamten Pfropfpolymerisat. Sein mittlerer Teilchendurchmesser liegt vorzugsweise im Bereich zwischen 50 und 250 nm. Insbesondere zwischen 80 und 200 nm. Daneben können weitere Pfopfkautschuktypen Y₁, Y₂, Y₃, ... vorhanden sein, deren mittlerer Teilchendurchmesser zwischen denen der Pfropfkautschuktypen X und Z liegen.

Multimodale Teilchengrößenverteilungen können durch unterschiedliche Methoden erhalten werden: Man kann eine gezielte Teilchengrößenverteilung schon durch Synthesenparameter während der Emulsionspolymerisation erstellen. Es besteht zudem die Möglichkeit durch Emulsionspolymerisation hergestellte monomodale Dispersionen nach der Synthese zu mischen oder entsprechende Pulver nach dem Trocknen der Dispersionen zu mischen.

Pfropfkautschuke mit verhältnismäßig enger, definierter Teilchengrößenverteilung werden zweckmäßigerweise durch die "Saatlatex"-Arbeitsweise hergestellt. Der Saatlatex ist die wässrige Emulsion eines Polymerisats der Monomeren C, vorzugsweise ein Homopolymerisat des Styrols, der Methylmethacrylats, eines C₁-C₈-Alkylacrylats oder ein Copolymerisat dieser Monomeren. Das Polymerisat hat vorzugsweise einen mittleren Teilchendurchmesser von 10 bis 50 nm. Bei dieser Arbeitsweise wird die Emulsion der Monomeren A + B in Gegenwart des vorgelegten Saatlatex durchgeführt, wobei dessen Feststoffe 0,01 bis 7 Gew.%, vorzugsweise 0,1 bis 5 Gew.-% der Monomeren ausmachen. Der mittlere Teilchendurchmesser des Pfropfkautschucks ist nun von der vorgelegten Menge an Feststoff abhängig: Bei viel Feststoff kann entweder durch die Menge an Saatlatex oder durch dessen Konzentration festgelegt werden.

Das bei der Polymerisation der Monomeren C in Gegenwart des Polyacrylatkautschuk aus den Monomeren A + B enthaltenen feinteiligen Pfropfcopolymerisat wird getrocknet, der pulverförmige Schlagzähmodifier wird in Mengen von 1 bis 25 Gew.-% mit PVC-Pulver und üblichen Zusatzstoffen, z. B. Füllstoffen, Stabilisatoren und Verarbeitungshilfsmittel, gemischt und nach üblichen Methoden zu hochschlagzähen PVC-Formteilen verarbeitet.

Weiterhin ist es möglich, die Polymerisatteilchen II des Schlagzähmodifiers vor der Sprühtrocknung mit Polymerisatteilchen III, erhalten durch radikalisch induzierte wässrige Emulsionspolymerisation wenigstens eines ethylenisch ungesättigten Monomers D abzumischen, die eine Glasübergangstemperatur > 50°C aufweisen (Monomere D).

Unter den Monomeren D versteht man beispielsweise C₁-C₈-Alkylacrylate, C₁-C₄-Alkylmethacrylate, Styrol, Acrylnitril, Methacrylsäure, Acrylsäure oder vernetzend wirkende, wenigstens zwei nicht konjugierte Vinylgruppen aufweisende Verbindungen oder Gemische davon. Daneben können den Monomeren D auch noch weitere copolymerisierbare ethylenisch ungesättigte Monomere zugegeben werden, wobei sich die Gesamtmengen an Monomer D und dem ethylenisch ungesättigten Monomer zu 100 Gew.-% addieren.

Diese Polymerisatteilchen D haben vorzugsweise eine Copolymerzusammensetzung, die mit PVC mischbar ist. Wenn die zugegebenen Polymerisatteilchen D unvernetzt sind, besteht eine bevorzugte Copolymerzusammensetzung aus mindestens 75 Gewichts-% Methylmethacrylat sowie bis zu 25 Gewichts-% weiteren C₁-C₈-Alkylacrylaten und C₁-C₄-Alkylmethacrylaten. Eine andere bevorzugte Copolymerzusammensetzung besteht aus mindestens 65 Gewichts-% Styrol und bis zu 35 Gewichts-% Acrylnitril.

Der mittlere Teilchendurchmesser der Polymerisatteilchen III beträgt 50 bis 300, bevorzugt 70 bis 170 nm. Der Anteil ist grösser als 5 Gew.-% und kleiner als 30 Gew.-% bezogen auf die Menge an Polymerisatteilchen II.

Unter den weiteren copolymerisierbaren ethylenisch ungesättigten Monomeren, die den Monomeren A, C und D noch zugesetzt werden können, versteht man beispielsweise Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze, lineare 1-Olefine, verzweigtkettige 1-Olefine oder cyclische Olefine, wie z. B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z. B. Oligopropen, Oligohexen und Oligooctadecen; durch kationische Polymerisation hergestellte Olefine mit hohem α-Olefin-Anteil, wie z. B. Polyisobuten.

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann, wie z. B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Acrylamide und alkylsubstituierte Acrylamide, wie z. B. Acrylamid, Methacrylamid, N-tert.-Butylacrylamid, N-Methyl(meth)acrylamid.

Sulfogruppenhaltige Monomere, wie z. B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylester der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit Acrylsäure, Methacrylsäure oder Maleinsäure, wie z. B. Methyl(meth)acrylat, Ethyl(meth)acrylat, Propyl(meth)acrylat, Isopropyl(meth) acrylat, Butyl(meth)acrylat, Hexyl(meth)acrylat, 2-Ethylhexyl(meth)acrylat, Hydroxyethyl(meth)acrylat, Hydroxypropyl(meth) acrylat, Butandiol-1,4-monoacrylat, Maleinsäuredibutylester, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen.

Alkylaminoalkyl(meth)acrylate oder Alkylaminoalkyl(meth)acrylamide oder deren Quaternisierungsprodukte, wie z. B. 2-(N,N-Dimethylamino)ethyl(meth)acrylat, 3-(N,N-Dimethylamino)propyl(meth)acrylat, 2-(N,N,N-Trimethylammonium)ethyl(meth)acrylatchlorid, 2-Dimethylaminoethyl(meth)acrylamid, 3-Dimethylaminopropyl(meth)acrylamid, 3-Trimethylammoniumpropyl(meth)acrylamid-chlorid.

Vinyl- und Allylester von C₁- bis C₃₀-Monocarbonsäuren, wie z. B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere seien noch genannt:
N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Der Dispersion können vor der Sprühtrocknung Antioxidantien zugegeben werden. Die Antioxidantien werden als Granulat, pulverförmiger Feststoff oder vorzugsweise als Dispersion der Polymerisatdispersion zugemischt. Die Zugabe von Antioxidantien ist z. B. in EP 44 159 und EP 751 175 beschrieben. Die Zugabe von Antioxidantien erfolgt insbesondere, um die Selbsterwärmung und Selbstentzündung des sprühgetrockneten Produkts bei Lagerung und Transport zu vermeiden. Bevorzugte Antioxidantien sind ausgewählt aus der Stoffklasse der sterisch gehinderten Alkylphenole oder ihrer Kondensationsprodukte. Mögliche Antioxidantien sind ersichtlich aus Plastics Additives Handbook, 5th ed., München 2000, 1-139, Hanser Verlag.

Weiterhin werden der Dispersion während der Sprühtrocknung Antiblockmittel zugegeben werden. Das Antiblockmittel wird in Mengen von 0,1 bis 15 Gew.%, vorzugsweise 3 bis 8 Gew.-%, zugesetzt. In einer bevorzugten Ausführungsform werden hydrophobierte Antiblockmittel verwendet. Unter den Antiblockmitteln versteht man feinteilige Pulver beispielsweise aus Kalziumcarbonat, Talkum oder Kieselsäuren. Hydrophobierte Antiblockmittel sind beispielsweise mit Fettsäuren oder Fettalkoholen, beispielsweise Stearinsäure oder Palmitinsäure, beschichtetes Kalziumcarbonat oder durch Oberflächenbehandlung mit reaktiven Silanen, wie beispielsweise Chlorsilanen oder Hexamethyldisilazan, chemisch modifizierte Kieselsäuren. Vorzugsweise setzt man mit Stearinsäure beschichtetes Kalziumcarbonat ein. Die Antiblockmittel weisen vorzugsweise eine Primärteilchengrösse kleiner als 100 nm auf.

Zur Scherbeanspruchung und Zerkleinerung des aus der Sprühtrocknung erhaltenen Pulvers können alle dem Fachmann bekannten Mühlen für Feinmahlung verwendet werden. Dies sind Schneidmühlen, Prallmühlen wie Rotorprallmühlen oder Strahlprallmühlen, Walzenmühlen wie Wälzmühlen, Walzenstühle oder Gutbett-Walzenmühlen, Mahlkörpermühlen wie Kugelmühlen, Stabmühlen, Autogenmühlen, Planetenmühlen, Schwingmühlen, Zentrifugalmühlen oder Rührwerkmühlen sowie Mahltrockner. Zerkleinerungsmaschinen sind beschrieben in Ullmann's Encyclopedia of Industrial Chemistry, 6th ed. Vol. 11, p. 70 und Vol. 33, p 41-81. Vorzugsweise werden Mühlen verwendet, die mit einer Siebklassierung ausgestattet sind, besonders bevorzugte Geräte sind Siebfeingranulatoren und Rotorfeingranulatoren (Reibschnitzler).

### Beispiele

Die Feststoffgehalte wurden generell bestimmt, indem eine definierte Menge der wässrigen Polymerisatdispersion (ca. 5 g) bei 140°C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Messergebnisse dar.

Der mittlere Teilchendurchmesser der Copolymerisatteilchen wurde generell durch dynamische Lichtstreuung an einer 0,005 bis 0,01 gewichtsprozentigen wässrigen Dispersion bei 23°C mittels Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

### Beispiel 1

In einem 2-1-Polymerisationsreaktor mit Blattrührer und Heiz-/Kühleinrichtung wurde ein Gemisch aus 323,8 g entionisiertem Wasser und 2,27 g eines 33 gew.%igen wässrigen Polymerlatex (hergestellt durch radikalisch initiierte Emulsionspolymerisation von Styrol) mit einem gewichtsmittleren Teilchendurchmesser D_{W50} von 30 nm unter Stickstoffatmosphäre auf 80°C erhitzt. Dazu wurden bei vorgenannter Temperatur 8,06 g einer 7 gew.-%igen wässrigen Lösung von Natriumperoxodisulfat gegeben. Nach 10 min wurden Zulauf 1 und Zulauf 2 gestartet. Zulauf 1 wurde gleichmäßig über 3 h zudosiert. Zulauf 2 wurde gleichmäßig über 5 h zudosiert.

Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 708,94 g | n-Butylacrylat |
| 3,56 g | Allylmethacrylat |

Zulauf 2 waren 24,2 g einer 7 Gew.%igen wässrigen Lösung von Natriumperoxodisulfat.

Nach Ende von Zulauf 1 wurde nach 1 h Zulauf 3 gestartet und über 1 h gleichmäßig zudosiert.

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 37,5 g | Methylmethacrylat |

Nach Ende der Zuläufe 2 und 3 wurde weitere 0,5 h bei 80 °C gerührt und die Reaktionsmischung anschließend auf Raumtemperatur gekühlt. Die erhaltene wässrige Polymerisatdispersion wies einen Feststoffgehalt von 52,8 Gew.-% auf. Die mittlere Teilchengröße betrug 303 nm.

### Vergleichsbeispiel 1

Es wurde eine Dispersion nach der Vorschrift von Beispiel 1 hergestellt mit folgendem Unterschied:
Zulauf 1 war eine wässrige Emulsion hergestellt aus

| | |
|---|---|
| 125,1 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 608,25 g | n-Butylacrylat |
| 3,00 g | Allylmethacrylat |

Zulauf 3 war eine wässrige Emulsion hergestellt aus

| | |
|---|---|
| 54,15 g | entionisiertem Wasser |
| 5,0 g | einer 45 gew.%igen wässrigen Lösung des Natriumsalzes eines C₁₂-substituierten Biphenylethersulfonates (Dowfax® 2A1, Marke der Dow Chemical Company) |
| 138,75 g | Methylmethacrylat |

Die erhaltene wässrige Polymerisatdispersion wies einen Feststoffgehalt von 53,2 Gew.-% auf. Die mittlere Teilchengröße betrug 305 nm.

### Vergleichsbeispiel 2

Es wurde eine Dispersion nach der Vorschrift von Beispiel 1 hergestellt mit folgendem Unterschied:
Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 671,63 g | n-Butylacrylat |
| 3,38 g | Allylmethacrylat |

Zulauf 3 war eine wässrige Emulsion hergestellt aus

| | |
|---|---|
| 54,15 g entionisiertem Wasser | |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 75,0 g | Methylmethacrylat |

Die erhaltene wässrige Polymerisatdispersion wies einen Feststoffgehalt von 53,5 Gew.-% auf. Die mittlere Teilchengröße betrug 299 nm.

### Vergleichsbeispiel 3

Es wurde eine Dispersion nach der Vorschrift von Beispiel 1 hergestellt mit folgendem Unterschied:
Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 690,28 g | n-Butylacrylat |
| 3,47 g | Allylmethacrylat |

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 56,25 g | Methylmethacrylat |

Die erhaltene wässrige Polymerisatdispersion wies einen Feststoffgehalt von 53,6 Gew.-% auf. Die mittlere Teilchengröße betrug 300 nm.

### Vergleichsbeispiel 4

Es wurde eine Dispersion nach der Vorschrift von Beispiel 1 hergestellt mit folgendem Unterschied:
Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 727,59 g | n-Butylacrylat |
| 3,66 g | Allylmethacrylat |

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 18,75 g | Methylmethacrylat |

Die erhaltene wässrige Polymerisatdispersion wies einen Feststoffgehalt von 53,1 Gew.-% auf. Die mittlere Teilchengröße betrug 291 nm.

### Vergleichsbeispiel 5

In einem 2-l-Polymerisationsreaktor mit Blattrührer und Heiz-/Kühleinrichtung wurde ein Gemisch aus 323,8 g entionisiertem Wasser und 2,27 g eines 33 Gew.%igen wässrigen Polymerlatex (hergestellt durch radikalisch initiierte Emulsionspolymerisation von Styrol) mit einem gewichtsmittleren Teilchendurchmesser D_{W50} von 30 nm unter Stickstoffatmosphäre auf 80°C erhitzt. Dazu wurden bei vorgenannter Temperatur 8,06 g einer 7 Gew.-%igen wässrigen Lösung von Natriumperoxodisulfat gegeben. Nach 10 min wurden Zulauf 1 und Zulauf 2 gestartet. Beide Zuläufe wurden gleichmäßig über 3 h zudosiert.

Zulauf 1 war eine wässrige Emulsion hergestellt aus

| | |
|---|---|
| 245,87 g | entionisiertem Wasser |
| 15,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 746,25 g | n-Butylacrylat |
| 3,75 g | Allylmethacrylat |

Zulauf 2 waren 24,2 g einer 7 Gew.%igen wässrigen Lösung von Natriumperoxodisulfat.

Nach Ende der Zuläufe 1 und 2 wurde weitere 0,5 h bei 80°C gerührt und die Reaktionsmischung anschließend auf Raumtemperatur gekühlt. Die erhaltene wässrige Polymerisatdispersion wies einen Feststoffgehalt von 53,0 Gew.% auf. Die mittlere Teilchengröße betrug 288 nm.

### Beispiel 2

In einem 2-1-Polymerisationsreaktor mit Blattrührer und Heiz-/Kühleinrichtung wurde ein Gemisch aus 323,8 g entionisiertem Wasser und 3,64 g eines 33 Gew.-%igen wässrigen Polymerlatex (hergestellt durch radikalisch initiierte Emulsionspolymerisation von Styrol) mit einem gewichtsmittleren Teilchendurchmesser D_{W50} von 30 nm unter Stickstoffatmosphäre auf 80°C erhitzt. Dazu wurden bei vorgenannter Temperatur 8,06 g einer 7 Gew.-%igen wässrigen Lösung von Natriumperoxodisulfat gegeben. Nach 10 min wurden Zulauf 1 und Zulauf 2 gestartet. Zulauf 1 wurde gleichmäßig über 3 h zudosiert. Zulauf 2 wurde gleichmäßig über 5 h zudosiert.

Zulauf 1 war eine wässrige Emulsion hergestellt aus

| | |
|---|---|
| 191,2 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 709,83 g | n-Butylacrylat |
| 2,67 g | Allylmethacrylat |

Zulauf 2 waren 24,2 g einer 7 Gew.-%igen wässrigen Lösung von Natriumperoxodisulfat.

Nach Ende von Zulauf 1 wurde nach 1 h Zulauf 3 gestartet und über 1 h gleichmäßig zudosiert.

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 37,5 g | Methylmethacrylat |

Nach Ende der Zuläufe 2 und 3 wurde weitere 0,5 h bei 80°C gerührt und die Reaktionsmischung anschließend auf Raumtemperatur gekühlt. Die erhaltene wässrige Polymerisatdispersion wies einen Feststoffgehalt von 53,5 Gew.-% auf. Die mittlere Teilchengröße betrug 266 nm.

### Vergleichsbeispiel 6

Es wurde eine Dispersion nach der Vorschrift von Beispiel 2 hergestellt mit folgendem Unterschied:
Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 672,47 g | n-Butylacrylat |
| 2,53 g | Allylmethacrylat |

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 75,0 g | Methylmethacrylat |

Die erhaltene wässrige Polymerisatdispersion wies einen Feststoffgehalt von 53,6 Gew.-% auf. Die mittlere Teilchengröße betrug 264 nm.

### Vergleichsbeispiel 7

Es wurde eine Dispersion nach der Vorschrift von Beispiel 2 hergestellt mit folgendem Unterschied:
Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 691,13 g | n-Butylacrylat |
| 2,63 g | Allylmethacrylat |

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 56,25 g | Methylmethacrylat |

Die erhaltene wässrige Polymerisatdispersion wies einen Feststoffgehalt von 53,5 Gew.-% auf. Die mittlere Teilchengröße betrug 260 nm.

### Vergleichsbeispiel 8

Es wurde eine Dispersion nach der Vorschrift von Beispiel 2 hergestellt mit folgendem Unterschied:
Zulauf 1 war eine wässrige Emulsion hergestellt aus

| | |
|---|---|
| 191,7 g | entionisiertem Wasser |
| 10,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 728,51 g | n-Butylacrylat |
| 2,74 g | Allylmethacrylat |

Zulauf 3 war eine wässrige Emulsion hergestellt aus

| | |
|---|---|
| 54,15 g | entionisiertem Wasser |
| 5,0 g | einer 45 Gew.-%igen wässrigen Lösung des Natriumsalzes eines C₁₂-substituierten Biphenylethersulfonates (Dowfax® 2A1, Marke der Dow Chemical Company) |
| 18,75 g | Methylmethacrylat |

Die erhaltene wässrige Polymerisatdispersion wies einen Feststoffgehalt von 53,8 Gew.-% auf. Die mittlere Teilchengröße betrug 262 nm.

### Vergleichsbeispiel 9

In einem 2-1-Polymerisationsreaktor mit Blattrührer und Heiz-/Kühleinrichtung wurde ein Gemisch aus 323,8 g entionisiertem Wasser und 3,64 g eines 33 Gew.-%igen wässrigen Polymerlatex (hergestellt durch radikalisch initiierte Emulsionspolymerisation von Styrol) mit einem gewichtsmittleren Teilchendurchmesser D_{W50} von 30 nm unter Stickstoffatmosphäre auf 80°C erhitzt. Dazu wurden bei vorgenannter Temperatur 8,06 g einer 7 Gew.-%igen wässrigen Lösung von Natriumperoxodisulfat gegeben. Nach 10 min wurden Zulauf 1 und Zulauf 2 gestartet. Beide Zuläufe wurden gleichmäßig über 3 h zudosiert.

Zulauf 1 war eine wässrige Emulsion hergestellt aus

| | |
|---|---|
| 245,34 g | entionisiertem Wasser |
| 15,0 g | einer 45 Gew.-%igen wässrigen Lösung des Natriumsalzes eines C₁₂-substituierten Biphenylethersulfonates (Dowfax® 2A1, Marke der Dow Chemical Company) |
| 40,0 g | einer 3 Gew.-%igen wässrigen Lösung von Natriumpyrophosphat |
| 747,19 g | n-Butylacrylat |
| 2,81 g | Allylmethacrylat |

Zulauf 2 waren 24,2 g einer 7 Gew.%igen wässrigen Lösung von Natriumperoxodisulfat.

Nach Ende der Zuläufe 1 und 2 wurde weitere 0,5 h bei 80°C gerührt und die Reaktionsmischung anschließend auf Raumtemperatur gekühlt. Die erhaltene wässrige Polymerisatdispersion wies einen Feststoffgehalt von 53,3 Gew.% auf. Die mittlere Teilchengröße betrug 260 nm.

### Bestimmung der Schlagzähigkeit von PVC-Formkörpern

Eine Mischung aus
100 Teilen PVC-Pulver (Solvin 265 RE, Fa. Solvay)
7 Teilen Pb-Stabilisator (Baeropan R 2930 SP 1, Fa. Baerlocher)
6 Teilen CaCO₃ (Hydrocarb 95 T, Fa. Omya) und
4 Teilen TiO₂ (Kronos 2220, Fa. Kronos International)
wurde zusammen mit 7 Teilen (bezogen auf den Feststoffgehalt) der Polymerisatdispersionen der Beispiele 1 und 2 und der Vergleichsbeispiele 1 bis 9 auf eine Walze (Doppelwalzwerk der Fa. Collin GmbH, Typ 110P) gegeben, und es wurde durch 8 min Walzen bei 180°C ein Walzfell hergestellt. Dieses wurde bei 190°C für 8 min bei 15 bar und anschließend 5 min bei 200 bar zu einer Pressplatte gepresst, die Abkühlung erfolgte über 8 min bei 200 bar. Aus der Pressplatte wurden Probekörper gesägt und anschließend gekerbt. Die Bestimmung der Kerbschlagzähigkeiten erfolgte nach der Charpy-Methode in Anlehnung an DIN 53753. Es wurden Probekörper einer Dicke von 3 mm verwendet, die mit einer Doppel-V-Kerbe mit dem Kerbradius 0,1 mm versehen wurden. Die Messung erfolgte mit einem Pendelschlagwerk der Fa. Zwick (Type B5102E), der Nennwert des Arbeitsvermögens des Pendels war 1 J. Es wurde der Mittelwert aus zehn Einzelmessungen gebildet.

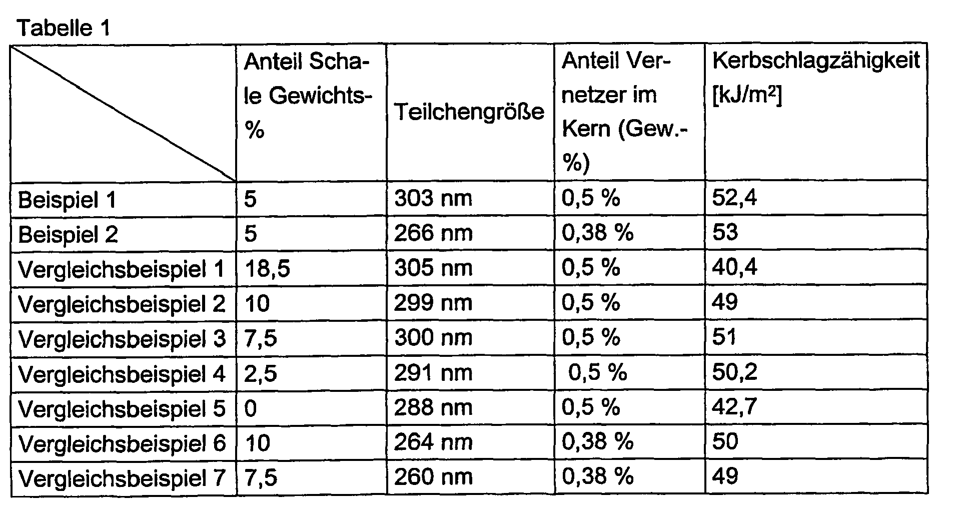

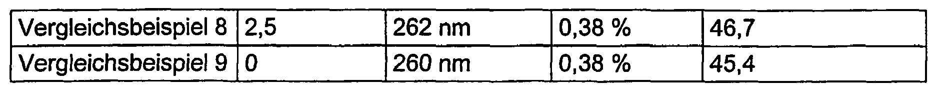

### Sprühtrocknung

Eine Polymerisatdispersionen gemäß Beispiel 1 wurden durch Sprühtrocknung getrocknet. Die Sprühtrocknung erfolgte in einem Sprühturm mit 1,0-mm-Einstoffdüsenzerstäubung bei 45 bar unter N₂-Geradeausfahrweise mit einer Turmeintrittstemperatur von 135°C und einer Austrittstemperatur von 58°C. Gleichzeitig mit der Polymerisatdispersion wurden kontinuierlich 4,0 Gew.-% (bezogen auf den Feststoffgehalt der Dispersion) mit Stearinsäure gecoatetes Calciumcarbonat (Winnofil S der Fa. Solvay) über eine gewichtsgesteuerte Doppelschnecke in den Kopf des Sprühturms eindosiert.

### Pulvereigenschaften

### Korngröße

Die volumenmittlere Teilchengröße d₅₀ wurde mit einem Mastersizer 2000/Hydro 2000 G der Fa. Malvem gemessen.

### Schüttdichte

Die Schüttdichte wurde nach EN ISO 60 ermittelt.

### Rieselfähigkeit

Die Rieselfähigkeit wurde in Anlehnung an DIN EN ISO 2431 bestimmt. Dazu wurde ein Auslaufbecher nach DIN 53 211 mit 6-mm-Düse verwendet.

### Verbackung

Die Verbackungsneigung wurde gemessen, indem 200 g des zu prüfenden Pulvers über ein 1000-um-Sieb in ein Kunststoffrohr (Innendurchmesser 100 mm, Höhe 160 mm), das in einer Petrischale (Durchmesser 120 mm) steht, eingefüllt wurde. Auf das eingefüllte Pulver wurde eine kreisförmige Kunststoffplatte (Durchmesser 98 mm) sowie ein Gewicht (Messing) von 15 kg aufgesetzt. Nach 2 h Verweilzeit bei 22°C wurden die Gewichte entfernt und das gepreßte Pulver vorsichtig auf ein 2000-µm-Sieb einer Siebwurfmaschine (Fritsch analysette 3Pro) überführt. Der Siebturm wurde geschlossen und die Probe mit einer Amplitude von 0,4 mm gesiebt. Gemessen wurde die Zeit, die benötigt wurde, damit das Pulver vollständig durch das Sieb gefallen war.

### Beispiel 3

Das aus der Sprühtrocknung gewonnene Polymerpulver wurde mittels eines Rotorfeingranulators (RFG 150 der Fa. Alexanderwerk) mit einem 0,5-mm-Siebeinsatz geschert.

### Beispiel 4

Das aus der Sprühtrocknung gewonnene Polymerpulver wurde mittels eines Rotorfeingranulators (RFG 150 der Fa. Alexanderwerk) mit einem 0,63-mm-Siebeinsatz geschert.

### Beispiel 5

Das Polymerpulver erhalten aus Beispiel 4 wurde mittels eines Rotorfeingranulators (RFG 150 der Fa. Alexanderwerk) mit einem 0,5-mm-Siebeinsatz geschert.

### Beispiel 6

Das aus der Sprühtrocknung gewonnene Polymerpulver wurde mittels eines Reibschnitzlers (R165N der Fa. Alexanderwerk) mit einem 0,3-mm-Siebeinsatz bei 700 U/min geschert.

### Beispiel 7

Das aus der Sprühtrocknung gewonnene Polymerpulver wurde mittels eines Reibschnitzlers (R165N der Fa. Alexanderwerk) mit einem 0,63-mm-Siebeinsatz bei 700 U/min geschert.

### Beispiel 8

Das aus der Sprühtrocknung gewonnene Polymerpulver wurde mittels eines Reibschnitzlers (R300N der Fa. Alexanderwerk) mit einem 0,3-mm-Siebeinsatz bei 330 U/min geschert.

### Vergleichsbeispiel 10

Das aus der Sprühtrocknung gewonnene Polymerpulver wurde direkt verwendet.

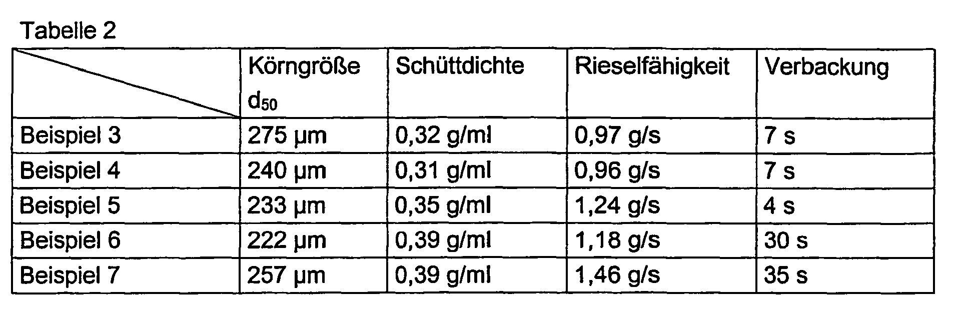

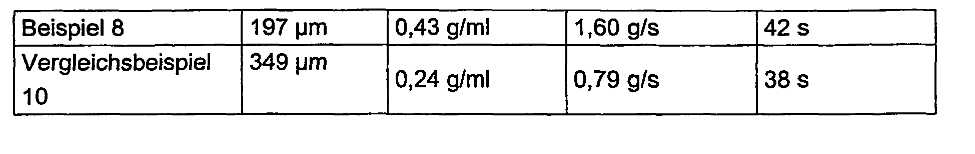

## Patentansprüche

1. Verfahren zur Herstellung von Polymerisatpulver aus einer wässrigen Polymerisatdispersion, **dadurch gekennzeichnet, dass** die wäßrige Dispersion der Polymerisatteilchen II durch radikalisch induzierte wäßrige Emulsionspolymerisation wenigstens eines ethylenisch ungesättigten Monomers C in Anwesenheit von dispers verteilten Polymerisatteilchen I erhalten wird, wobei
a) das Polymerisat des wenigstens einen ungesättigten Monomers C eine Glasübergangstemperatur > 60°C aufweist,
b) die dispers verteilten Polymerisatteilchen I durch radikalisch induzierte wässrige Emulsionspolymerisation einer Monomerenmischung I erhalten werden, welche zu
| | |
|---|---|
| 98,0 bis 99,9 Gew.-% | aus wenigstens einem ethylenisch ungesättigten Monomer A besteht, dessen Polymerisat eine Glasübergangstemperatur < -20°C aufweist, und |
| 0,1 bis 2,0 Gew.-% | aus wenigstens einer vernetzend wirkenden, wenigstens zwei nicht konjugierte Vinylgruppen aufweisenden Verbindung (Monomere B) |
besteht,
c) das Mengenverhältnis von Monomerenmischung I zu Monomer C > 90 Gew.-%: <10 Gew.-% beträgt, wobei sich die Gesamtmengen an Monomerenmischung I und Monomer C zu 100 Gew.-% addieren,
d) die Herstellung des Pulvers aus der wässrigen Dispersion von Polymerisatteilchen II
i. durch Sprühtrocknung in Anwesenheit von 0,1 bis 15 Gew.% wenigstens eines Antiblockmittels, bezogen auf die Gesamtmasse an Polymerisatteilchen II, und anschließender Zerkleinerung des Rohpulvers mittels mechanisch und/oder pneumatisch induzierter Scherkräfte oder
ii. durch mechanische und/oder pneumatische Mahltrocknung in Anwesenheit von 0,1 bis 15 Gew.-% wenigstens eines Antiblockmittels, bezogen auf die Gesamtmenge an Polymerisatteilchen II, erfolgt.

2. Verfahren nach Anspruch 1, **dadurch gekennzeichnet, dass** zur Zerkleinerung des Rohpulvers ein Siebfeingranulator, ein Rotorfeingranulator oder eine Wirbelmühle verwendet wird.

3. Verfahren nach Anspruch 1, **dadurch gekennzeichnet, dass** zur Mahltrocknung eine Wirbelmühle verwendet wird.

4. Verfahren nach einem der Ansprüche 1 bis 3, **dadurch gekennzeichnet, dass** die Polymerisatteilchen II eine multimodale Teilchengrößenverteilung aufweisen und mindestens zwei Teilchenpopulationen, die die gleiche oder verschiedene chemische Zusammensetzungen aufweisen enthalten, deren mittlere Teilchendurchmesser sich um mindestens 30 nm voneinander unterscheiden, wobei die Teilchenpopulation mit dem größten mittleren Teilchendurchmesser einen Anteil von mindestens 15 Gew.-% und die Teilchenpopulation mit dem kleinsten mittleren Teilchendurchmesser einen Anteil von mindestens 5 Gew.-% aufweist.

5. Verfahren nach einem der Ansprüche 1 bis 4, **dadurch gekennzeichnet, dass** der wässrigen Dispersion der Polymerisatteilchen II vor der Sprühtrocknung Polymerisatteilchen III, erhalten durch radikalisch induzierte wässrige Emulsionspolymerisation wenigstens eines ethylenisch ungesättigten Monomers D, hinzugegeben werden, wobei
a. das Polymerisat des wenigstens einen ungesättigten Monomers D eine Glasübergangstemperatur > 50°C aufweist,
b. der Anteil der Polymerisatteilchen III > 5 Gewichts-% und < 30 Gewichts-% beträgt bezogen auf die Menge an Polymerisatteilchen II
c. das wenigstens eine Monomer D ausgewählt ist aus der Gruppe der C₁-C₈-Alkylacrylate, C₁-C₄-Alkylmethacrylate, Styrol, Acrylnitril, Methacrylsäure, Acrylsäure oder der vernetzend wirkenden, wenigstens zwei nicht konjugierte Vinylgruppen aufweisenden Verbindungen, oder Gemischen davon.

6. Verfahren nach einem der Ansprüche 1 bis 5, **dadurch gekennzeichnet, dass** das Mengenverhältnis von Monomerenmischung I zu Monomer C zwischen ≥93 Gew.-% : <7 Gew.% und <97 Gew.% : >3 Gew.-% beträgt.

7. Verfahren nach einem der Ansprüche 1 bis 6, **dadurch gekennzeichnet, dass**
a. die Monomere A zu 95-100 Gew.-% ausgewählt sind aus der Gruppe der C₁-C₈-Alkylacrylate, Butadien oder Gemischen davon,
b. das Monomer B ausgewählt ist aus der Gruppe Allylmethacrylat, Butandioldimethacrylat, oder Dihydrodicyclopentadienylacrylat,
c. die Monomere C zu 90 bis 100 Gew.-% ausgewählt sind aus der Gruppe der C₁-C₄-Alkylmethacrylate, der C₁-C₈-Alkylacrylate, Vinylchlorid, Styrol, Acrylnitril oder Gemischen davon.

8. Verfahren nach einem der Ansprüche 1 bis 6, **dadurch gekennzeichnet, dass** als Monomer A n-Butylacrylat und/oder 2-Ethylhexylacrylat, als Monomer B Allylmethacrylat und als Monomer C Methylmethacrylat eingesetzt wird.

9. Verfahren nach einem der Ansprüche 1 bis 8, **dadurch gekennzeichnet, dass** das Antiblockmittel eine Primärteilchengröße < 100 nm aufweist.

10. Verfahren nach einem der Ansprüche 1 bis 9, **dadurch gekennzeichnet, dass** als Antiblockmittel mit Stearinsäure beschichtetes Kalziumcarbonat eingesetzt wird.

11. Polymerisatpulver erhältlich nach einem Verfahren gemäß einem der Ansprüche 1 bis 10.

12. Verwendung von Polymerisatpulver gemäß Anspruch 11 zum Modifizieren von Polyvinylchlorid (PVC)

13. PVC-Massen enthaltend 0,1 bis 50 Gew.-% an Polymerisatpulver gemäß Anspruch 11 in homogener Verteilung.

14. Verwendung von PVC-Massen gemäß Anspruch 13 zur Herstellung von Formgegenständen.

15. Formgegenstände hergestellt unter Verwendung von PVC-Massen gemäß Anspruch 13.

## Claims

1. A process for production of polymer powder from an aqueous polymer dispersion, which comprises obtaining the aqueous dispersion of the polymer particles II via free-radical-initiated aqueous emulsion polymerization of at least one ethylenically unsaturated monomer C in the presence of dispersely distributed polymer particles I, where
a) the polymer of the at least one unsaturated monomer C has a glass transition temperature > 60°C,
b) the dispersely distributed polymer particles I are obtained via free-radical-initiated aqueous emulsion polymerization of a monomer mixture I, composed of
| | |
|---|---|
| from 98.0 to 99.9% by weight | of at least one ethylenically unsaturated monomer A whose polymer has a glass transition temperature < -20°C, and |
| from 0.1 to 2.0% by weight | of at least one compound (monomer B) having crosslinking action and having at least two non- conjugated vinyl groups, |
c) the quantitative ratio of monomer mixture I to monomer C is > 90% by weight: < 10% by weight, where the total amounts of monomer mixture I and monomer C give a total of 100% by weight,
d) the powder is produced from the aqueous dispersion of polymer particles II
i. via spray drying in the presence of from 0.1 to 15% by weight of at least one antiblockingagent, based on the total weight of polymer particles II, and subsequent comminution of the crude powder by means of mechanically and/or pneumatically induced shear forces, or
ii. via mechanical and/or pneumatic grinder drying in the presence of from 0.1 to 15% by weight of at least one antiblocking agent, based on the total amount of polymer particles II.

2. The process according to claim 1, wherein a sieve-based fine granulator, a rotor-based fine granulator or a fluidizer mill is used to comminute the crude ponder.

3. The process according to claim 1, wherein a fluidizer mill is used for the grinder-drying process.

4. The process according to any of claims 1 to 3, wherein the polymer particles II have a multimodal particle size distribution, and comprise at least two particle populations which have the same or different chemical constitutions, whose average particle diameters differ from one another by at least 30 nm, where the content of the particle population with the largest average particle diameter is at least 15% by weight and the content of the particle population with the smallest average particle diameter is at least 5% by weight.

5. The process according to any of claims 1 to 4, wherein, prior to the spray-drying process, polymer particles III obtained via free-radical-initiated aqueous emulsion polymerization of at least one ethylenically unsaturated monomer D are added to the aqueous dispersion of the polymer particles II, where
a. the polymer of the at least one unsaturated monomer D has a glass transition temperature > 50°C,
b. the content of the polymer particles III, based on the amount of polymer particles II, is > 5% by weight and < 30% by weight,
c. the at least one monomer D has been selected from the group of the C₁-C₈-alkyl acrylates, C₁-C₄-alkyl methacrylates, styrene, acrylonitrile, methacrylic acid, acrylic acid, or of the compounds having crosslinking action and having at least two nonconjugated vinyl groups, or from mixtures of these.

6. The process according to any of claims 1 to 5, wherein the quantitative ratio of monomer mixture I to monomer C is from ≥93% by weight : < 7% by weight to < 97% by weight : > 3% by weight.

7. The process according to any of claims 1 to 6, wherein
a. from 95 to 100% by weight of the monomers A have been selected from the group of the C₁-C₈-alkyl acrylates, butadiene, or from mixtures of these,
b. the monomer B has been selected from the group of allyl methacrylate, butanediol dimethacrylate, or dihydrodicyclopentadienyl acrylate,
c. from 90 to 100% by weight of the monomers C have been selected from the group of the C₁-C₄-alkyl methacrylates, the C₁-C₈-alkyl acrylates, vinyl chloride, styrene, acrylonitrile, or from mixtures of these.

8. The process according to any of claims 1 to 6, wherein the monomer A used comprises n-butyl acrylate and/or 2-ethylhexyl acrylate, the monomer B used comprises allyl methacrylate, and the monomer C used comprises methyl methacrylate.

9. The process according to any of claims 1 to 8, wherein the antiblocking agent has a primary particle size < 100 nm.

10. The process according to any of claims 1 to 9, wherein the antiblocking agent used comprises stearic acid-coated calcium carbonate.

11. A polymer powder obtainable by a process according to any of claims 1 to 10.

12. The use of polymer powder according to claim 11 for modification of polyvinyl chloride (PVC).

13. A PVC composition comprising from 0.1 to 50% by weight of polymer powder according to claim 11 homogeneously distributed.

14. The use of PVC compositions according to claim 13 for production of molding.

15. A molding produced using PVC compositions according to claim 13.

## Revendications

1. Procédé de fabrication d'une poudre polymère à partir d'une dispersion polymère aqueuse, **caractérisé en ce que** la dispersion aqueuse des particules polymères II est obtenue par polymérisation en émulsion aqueuse induite radicalairement d'au moins un monomère C éthyléniquement insaturé en présence de particules polymères I dispersées, dans lequel
a) le polymère du ou des monomères C insaturés présente une température de transition vitreuse > 60 °C,
b) les particules polymères I dispersées sont obtenues par polymérisation en émulsion aqueuse induite radicalairement d'un mélange de monomères I qui est constitué de
98,0 à 99,9 % en poids d'au moins un monomère A éthyléniquement insaturé, dont le polymère présente une température de transition vitreuse < -20°C et
0,1 à 2,0 % en poids d'au moins un composé à action réticulante, comportant au moins deux groupes vinyles non conjugués (monomères B),
c) le rapport de quantités entre le mélange de monomères I et le monomère C est de > 90 % en poids:< 10 % en poids, les quantités totales du mélange de monomères 1 et du monomètre C représentant 100 % en poids,
d) la fabrication de la poudre à partir de la dispersion aqueuse de particules polymères II a lieu
i. par séchage par pulvérisation en présence de 0,1 à 15 % en poids d'au moins un agent antiblocage, par rapport à la masse totale de particules polymères II, puis broyage de la poudre brute par des forces de cisaillement induites mécaniquement et/ou pneumatiquement ou
ii. par séchage par broyage mécanique et/ou pneumatique en présence de 0,1 à 15 % en poids d'au moins un agent antiblocage, par rapport à la quantité totale de particules polymères II.

2. Procédé selon la revendication 1, **caractérisé en ce qu'**un granulateur fin à tamis, un granulateur fin à rotor ou un broyeur à turbulence est utilisé pour le broyage de la poudre brute.

3. Procédé selon la revendication 1, **caractérisé en ce qu'**un broyeur à turbulence est utilisé pour le séchage par broyage.

4. Procédé selon l'une quelconque des revendications 1 à 3, **caractérisé en ce que** les particules polymères II présentent une distribution de tailles de particules multimodale et au moins deux populations de particules, qui présentent la même composition ou des compositions différentes, dont le diamètre de particule moyen diffère d'au moins 30 nm les unes par rapport aux autres, la population de particules qui a le plus grand diamètre de particule moyen représentant une partie d'au moins 15 % en poids et la population de particules qui a le plus petit diamètre de particule moyen représentant une partie d'au moins 5 % en poids.

5. Procédé selon l'une quelconque des revendications 1 à 4, **caractérisé en ce que** des particules polymères III, obtenues par polymérisation en émulsion aqueuse induite radicalairement d'au moins un monomètre éthyléniquement insaturé D sont ajoutées à la dispersion aqueuse des particules polymères II avant le séchage par pulvérisation, dans lequel
a. le polymère du ou des monomères D insaturés présente une température de transition vitreuse > 50 °C,
b. la proportion de particules polymères III est > 5 % en poids et < 30 % en poids par rapport à la quantité de particules polymères II,
c. le ou les monomères D sont choisis dans le groupe des acrylates d'alkyle en C₁-C₈, des méthacrylates d'alkyle en C₁-C₄, du styrène, de l'acrylonitrile, de l'acide méthacrylique, de l'acide acrylique ou des composés à action réticulante, qui comportent au moins deux groupes vinyles non conjugués, ou leurs mélanges.

6. Procédé selon l'une quelconque des revendications 1 à 5, **caractérisé en ce que** le rapport de quantités entre le mélange de monomères I et le monomère C est compris entre ≥ 93 % en poids 7 % en poids et < 97 % en poids:> 3 % en poids.

7. Procédé selon l' une quelconque des revendications 1 à 6, **caractérisé en ce que**
a. les monomères A sont choisis à 95-100 % en poids dans le groupe des acrylates d'alkyle en C₁-C₈, du butadiène ou de leurs mélanges,
b. le monomère B est choisi dans le groupe du méthacrylate d'allyle, du diméthacrylate de butane diol ou de l'acrylate de dihydrodicyclopentadiényle,
c. les monomères C sont choisis de 90 à 100 % en poids dans le groupe des méthacrylates d'alkyle en C₁-C₄, des acrylates d'alkyle en C₁-C₈, du chlorure de vinyles, du styrène, de l'acrylonitrile ou de leurs mélanges.

8. Procédé selon l'une quelconque des revendications 1 à 6, **caractérisé en ce que** l'acrylate de n-butyle et/ou l'acrylate de 2-éthylhexyle est utilisé en tant que monomère A, le méthacrylate d'allyle en tant que monomère B et le méthacrylate de méthyle en tant que monomère C.

9. Procédé selon l'une quelconque des revendications 1 à 8, **caractérisé en ce que** l'agent antiblocage présente une taille de particules primaires < 100 nm.

10. Procédé selon l'une quelconque des revendications 1 à 9, **caractérisé en ce que** du carbonate de calcium enduit d'acide stéarinique est utilisé en tant qu'agent antiblocage.

11. Poudre polymère prouvant être obtenue par un procédé selon l'une quelconque des revendications 1 à 10.

12. Utilisation d'une poudre polymère selon la revendication 11 pour la modification de chlorure de polyvinyle (PVC).

13. Matières à base de PVC contenant 0,1 à 50 % en poids d'une poudre polymère selon la revendication 11 en distribution homogène.

14. Utilisation de matières à base de PVC selon la revendication 13 pour la fabrication d'objets moulés.

15. Objets moulés fabriqués en utilisait des matières à base de PVC selon là revendication 13.
